# EUROPEAN PATENT APPLICATION

(11) **EP 2 333 685 A1**
(43) Date of publication of application: **15.06.2011**
(21) Application number: 09306225.5
(22) Date of filing: 14.12.2009
(51) Int. Cl.: G06F 21/00

(54) **Method to restrict smart card usage, recording medium, program, certificate and computer for this method**

(71) Applicant: Gemalto SA, 92190 Meudon (FR)
(72) Inventor: Huysmans, Guillaume, 83500, La Seyne sur Mer (FR)

(57) **Abstract**

The method to restrict smart card usage by a host application hosted on a host computer to which the smart card is connected, comprises:

- extracting (70) smart card usage control data from a host application certificate, the smart card usage control data defining authorized smart card usages and inhibited smart card usages which are specific to this host application,
- inhibiting (76) any smart card usage triggered by the host application which correspond to an inhibited smart card usage as defined from the smart card usage control data extracted from the host application certificate, and

authorizing (74) any smart card usage triggered by the host application which correspond to an authorized smart card usage defined from the smart card usage control data extracted from the host application certificate.

## Description

### FIELD OF THE INVENTION

The invention relates to a method to restrict smart card usage by a host application hosted on a host computer to which the smart card is connected. The invention also relates to a recording medium, a computer program, an application cryptographic certificate and a host computer to carry out this method.

### BACKGROUND OF THE INVENTION

In the following text, the application hosted on the host computer is named "host application". For example, the host application is a web-application that executes itself within a web-browser like Internet Explorer® or Firefox®. When the host application is a web-application it is a Javascript typically.

A smart card is a portable electronic device which can be easily carried by an individual and can receive orders from other devices in the form of commands. Due to the portable requirement, a smart card has very limited hardware resources.

Furthermore, the smart card is able to protect access to internally stored data or applications based on access conditions. For example, an entity willing to access the smart card may be denied such an access if it does not prove its knowledge of a PIN code or of a cryptographic key, while the same entity would be authorized to access and use the smart card if it proves its knowledge of the PIN code or cryptographic key.

Typically the smart card is presented in the form of a flat plastic card with an electronic chip incorporated in the thickness of the plastic card. However others form factors exist. For example, a smart card may be presented as a dongle like an USB dongle.

It is known from a product, known as "Sconnect^{™}", developed by the applicant and which is partially disclosed in patent application W02009/027409 to :
- receive and check a certificate to authenticate the host application requesting usage of the smart card,
- if the application is not authenticated, restrict the smart card usage to a default smart card usage policy that applies to any non-authenticated applications.

Typically, the default smart card usage policy consists in inhibiting any smart card usage.

On the contrary, if the host application is authenticated, then unrestricted access to smart card is granted.

Patent application W02009/027409 also proposes, before granting unrestricted access to smart cards, to compare an identifier of the host application to a prerecorded white or black list. For example, the application identifier is an URL (Uniform Resource Locator) from which the host application has been downloaded.

If the host application belongs to the white list and is authenticated, then unrestricted access to smart cards is granted. On the contrary, if the host application belongs to the black list, access to smart card is denied.

According to this method an authenticated host application can interact with any smart cards connected to the host computer. Normally a well designed authenticated host application should only access smart cards and smart card applications it is concerned with. However, it is not possible to warranty that every authenticated host application will be ever bug free or with zero vulnerability.

Thus, in case an attack would succeed in corrupting some part of the authenticated host application, it would be very easy for the attacker to access any data and any smart card applications on the smart cards connected to the host computer. The attacker could even perform attacks likes "denial of services". This latter attack can consist in repeatedly presenting an incorrect login credential to the smart card. Since most smart card have a limit on a number of incorrect login attempts permitted, this would result in locking the smart card. Once the smart card is locked, it is no more available for use absent some high-level intervention, e.g., from the card issuer.

### SUMMARY OF THE INVENTION

Accordingly, it is an object of the invention to provide a more secured method to restrict smart card usage.

With the foregoing and other objects in view there is provided, in accordance with the invention, a method wherein if the host application is authenticated then, the method also comprises :
- extracting smart card usage control data from the host application certificate, the smart card usage control data defining authorized smart card usages and inhibited smart card usages which are specific to this host application,
- inhibiting any smart card usage triggered by the host application which correspond to an inhibited smart card usage as defined from the smart card usage control data extracted from the host application certificate, and
- authorizing any smart card usage triggered by the host application which correspond to an authorized smart card usage defined from the smart card usage control data extracted from the host application certificate.

Due to the smart card control usage data added in the host application certificate, once the host application has been correctly authenticated, it is still possible to restrict smart card usage.

For example, it is possible to protect smart cards that are not targeted by the host application without modifying theses smart cards. It is also possible to prevent accidental readings of private data that should not be read by the host application normally.

Furthermore, because the smart card usage control data are incorporated in the host application certificate, they cannot be modified without corrupting the certificate. For example, any attempt to increase the authorized smart card usage by modifying the certificate will result in the host application being not authenticated and in no or a very limited access to smart cards.

The embodiments of the above terminal may comprise one or several of the following features:
■ the smart card usage control data defines at least one of the following item:
   - a set of smart card identifiers that identifies the only smart card(s) the host application is authorized to used, and
   - a set of smart card command identifiers that identifies the only command(s) the host application is authorized or not authorized to use;
■ the smart card usage control data defines the identifier(s) of the only smart card applications that can be used by the host application among a greater number of smart card applications hosted in smart cards;
■ the host application certificate is conformed to X509 version 3 standard and the smart card usage control data are contained in an optional extension field of this certificate;
■ the default smart card usage policy is to inhibit any smart card access from non-authenticated host application;
■ the method comprises :
   - authenticating a web-site from which is downloaded the host application with a web-site certificate, and subsequently
   - only if the web-site is authenticated, proceeding to the receiving and checking of the host application certificate;
■ the host application is a web-application executed within a web-browser having a web-browser extension that provides an interface between web-applications and a smart card directly connected to the host computer.

The above embodiments of the method present the following advantages:
■ including in the host application certificate a list that identifies the only smart cards the host application may access is a very efficient way to prevent the host application from accessing other smart cards not concern with this host application;
■ including in the host application certificate a list that defines the only smart card commands usable by the host application allows for a very efficient way to prevent the host application from performing some none authorized interaction with the smart card;

■ including in the host application certificate a list of smart card application identifiers, makes possible to prevent the host application to access to other non-authorized smart card applications hosted in this smart card;
■ authenticating the web-site from which is downloaded the host application increases the security;
■ applying the method to web-applications increases the security of such web-applications.

The invention also relates to a recording medium and a computer program comprising instructions to carry out the above method when the instructions are executed by an electronic calculator.

The invention also relates to a host application cryptographic certificate including smart card usage control data adapted to be used by the above method to define the authorized smart card control usage and the non-authorized smart card usage.

Finally, the invention also relates to a host computer comprising at least:
- an electronic calculator,
- a smart card reader in which is received a smart card, and
- a memory storing instructions to have the computer performing the above method when the instructions are executed by the electronic calculator.

These and other aspects of the invention will be apparent from the following description, drawings and claims.

### BRIEF DESCRIPTION OF THE DRAWINGS

Figure 1 is a schematic diagram of a system to securely access smart cards connected to a host computer ;

Figure 2 is a schematic diagram of software modules implemented in the host computer of figure 1;

Figure 3 is a schematic illustration of a cryptographic certificate used in the system of figure 1, and

Figure 4 is a flowchart of a method to restrict smart card access in the system of figure 1.

In the drawings, the same reference numbers are used to designate the same elements.

In the following description, well-known functions or constructions by a person of ordinary skill in the art are not described in detail.

### DETAILED DESCRIPTION

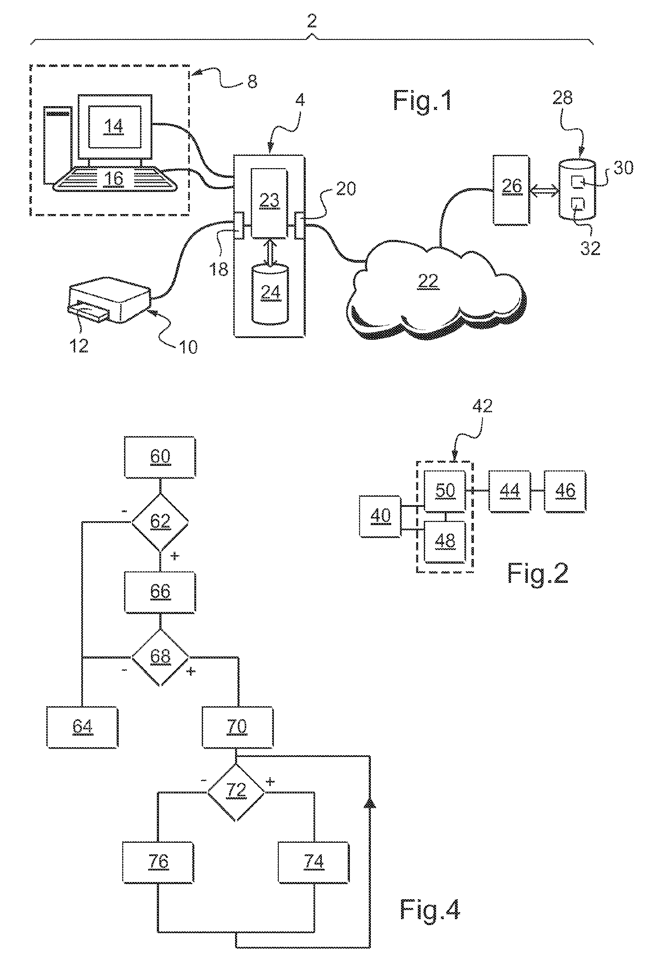

Figure 1 shows a system 2 to restrict access to smart cards connected to a host computer 4 from a host application executed on this host computer. For illustration purpose only, the description is done in the particular case where the host application is a web-application.

Computer 4 is a hardware machine capable to interact with peripheral devices. For explanatory purpose, only two peripheral devices are shown in figure 1. The first one is a user interface 8 to exchange data and instructions with a user of computer 4. The second one is a card reader 10 to connect a smart card 12 to computer 4.

For example, user interface 8 is made of a screen 14 and a keyboard 16.

Reader 10 makes possible the communication between smart card 12 and computer 4. For example, reader 10 has a slot in which is received smart card 12. Smart card 12 can be inserted and, alternatively, removed from the slot. When smart card 12 is inserted in reader 10, contact pads of reader 10 electrically contact corresponding contact pads of smart card 12. Communication with smart card 12 and powering of smart card 12 take place through these contact pads when they are electrically connected to one other.

Computer 4 is equipped with several external interfaces to connect the peripheral devices. For simplicity, only one external interface 18 to connect reader 10 to computer 4 is shown. For example, interface 18 is a USB (Universal Serial Bus) port.

Computer 4 has also several external ports to connect it to external networks. For simplicity, only one external port 20 is shown in figure 1. Port 20 connects computer 4 to a wide area network 22. For example, port 20 is an RJ45 port.

For example, network 22 is a packet switched network. For instance, network 22 is the network known as Internet or World Wide Web.

Computer 4 has a central processing unit 23 internally connected to these interfaces and ports. Unit 23 is also connected to a memory 24. Memory 24 may comprise hard disk, NVRAM (Non Volatile Random Access Memory) or other kind of recording medium.

Unit 23 is made of one or several electronic programmable calculators able to execute instructions recorded on a recording medium. For instance, unit 23 executes instructions recorded in memory 24 and memory 24 contains instructions to execute the method of figure 4.

Through Internet, computer 4 can connect to many web-servers. For simplicity, only one web-server 26 is shown.

Web-server 26 hosts a web site that can be addressed by any host computer connected to Internet using the URL (Uniform Resource Locator) of the web site. The web site includes at least a web-application to be executed within the web-browser of any host computer that connects to this web site. The web-application is typically a script written in Javascript™. Such script is interpreted by a virtual machine of the web-browser. The web-application is a host application that interacts with smart cards directly connected to the host computer.

Web-server 26 establishes a secure connection over Internet with computer 4. To do so, data encryption is used. For example, web-server 26 is a Https server which uses Https (HyperText Transfer Protocol Secured) protocol to secure the connection over Internet. Https protocol is the protocol Http (HyperText Transfer Protocol) combined with an encryption layer using standard protocols like SSL (Secured Socket Layer) or TLS (Transport Layer Security). Those standard protocols include steps to authenticate the web site by mean of a web site certificate. To this end, web-server 26 is connected to a memory that includes a web site cryptographic certificate 30.

In addition to certificate 30, a web-application certificate 32 is recorded for the web-application of the web site that interacts with smart cards directly connected to the host computer. This web-application certificate allows for secure authentication of the web-application. An application that has successfully been authenticated is an authenticated application. On the contrary, if authentication of the web-application fails, then the application is a non-authenticated application. For simplicity, only one web-application certificate 32 is shown in figure 1.

In these embodiments, certificates 30 and 32 comply with X509 version 3 standard. Thus, such certificates contain :
- information on the certificate holder,
- a validity period,
- a public key, and
- a signature of the certificate.

Typically the signature is obtained by ciphering a hash of data contained in the certificate with a private key of a certificate authority that did edit this certificate.

Figure 2 shows a software architecture implemented in computer 4. For example, this software architecture corresponds to the one disclosed in patent application W02009/027409 and will not be described in details.

Computer 4 includes :
- a web-browser 40 to navigate on the World Wide Web,
- a web-browser extension 42 to interact with smart card 12,
- a smart card resource manager 44, and
- a smart card reader driver 46 to pilot reader 10.

Web-browser 40 establishes secure connections over Internet using https protocol. Web-browser 40 also executes web-applications downloaded from a web site. For example, web-browser 40 is a commercially available web-browser like Internet Explorer™ from Microsoft Corporation™ or a freely available web-browser like Firefox™ or Opera™.

Web-browser extension 42 provides an interface between web-applications and smart card resource manager 44 found in most computers. The web-browser extension insulates the web-applications from the smart card resource manager 44. Furthermore, the web-browser extension, via the smart card resource manager 44, provides for a communication pipe between web-applications and smart cards connected to host computer 4.

For example, web-browser extension 42 corresponds to the smart card resource manager web-browser application interface program disclosed in patent application W02009/027409. It is reminded that, unless directly built into the web-browser or indirectly via a plug-in, a Javascript in a web page cannot communicate with the hardware of the host machine. Web-browser extension 42 enables this communication channel between Javascript in a web page and smart cards connected to computer 4.

Web-browser extension 42 includes :
- a script library 48, and
- a plug-in or add-on 50.

Script library 48 is a web-browser and platform independent software library. To this end, for example, it is written in Javascript. Library 48 is known under the name of "Sconnect" now. For example, it corresponds to the Smart card interface script module in patent application W02009/027409. Among many other scripts, it includes scripts to detect the type of web-browser used and to automatically select the correct add-on specific to the detected web-browser able to manage the connected smart card.

Web-browser add-on 50 is a web-browser and platform depend software. For example, it corresponds to the smart card manager wrapper web-browser extension in patent application W02009/027409. It allows web-applications to interact with smart card through smart card resource manager 44.

In this embodiment, add-on 50 is able :
- to download and check web-application certificates,
- to parse web-application certificates to extract smart card usage control data, and
- to control the smart card usage.

Preferably, add-on 50 is a signed application. Thus this makes any attempt to corrupt the add-on 50 application code very difficult since such code corruption can be easily detected and triggers counter-measures.

Smart card resource manager 44 interacts with driver 46 of the smart card reader 10. Manager 44 is based on the PC/SC specification defined the PC/SC workgroup.

Driver 46 pilots reader 10 connected to USB port 18. Preferably, driver 46 is implemented as a script module like "script module 301" in patent application W02009/027409.

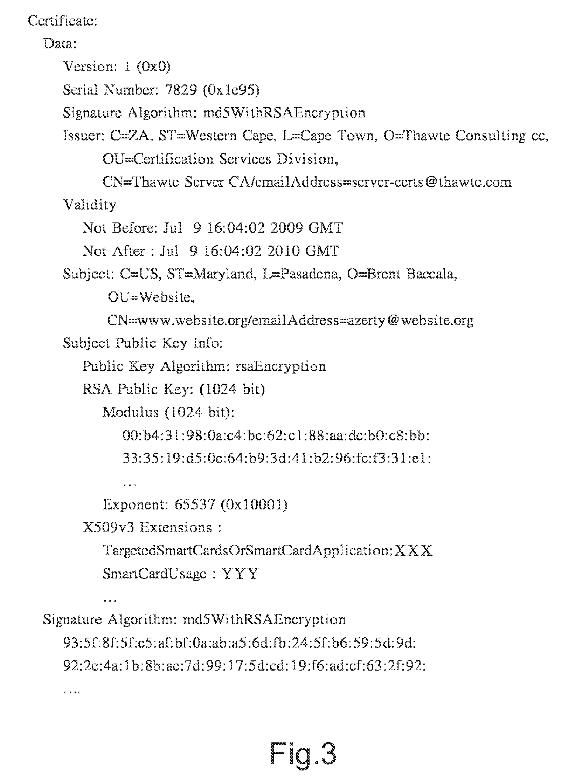

Figure 3 shows an exemplary embodiment of web-application certificate 32. Certificate 32 complies with standard X509 version 3. Thus, readers may refer to this standard to have a more detailed explanation of each of the certificate fields. The symbol "..." in figure 3 indicates that some parts of the certificate have being omitted to simplify figure 3. Only the fields necessary to understand the invention will be discussed in more details.

Certificate 32 includes the name of the web-application. In this embodiment, the name of the web-application is the web-site URL from which the web-application can be downloaded. Here, the web-application name is "www.website.org". In certificate 32, this name can be found in the field "Subject" and under section "CN" (Common Name).

X509 version 3 standard allows for optional extensions to be defined in the field "X509v3 Extensions". Each extension is identified by a specific OID (Object Identifier). These extensions are used to incorporate smart card usage control data in the certicate. For example, two new OID are defined, respectively, "TargetedSmartCardOrSmartCardApplication" and "SmartCardUsage". The values of "TargetedSmartCardOrSmartCardApplication" and "SmartCardUsage" are XXX and YYY respectively.

Value XXX defines a white list of the only smart cards that the web-application "www.website.org" is authorized to use. For example, value XXX contains a list of smart card identifiers that can be used by the web-application. The smart card identifier is for example an ATR (Answer to reset) identifier.

Value YYY define a white list of the only smart card commands that the web-application "www.website.org" is authorized to use. For example, value YYY is a list of ADPU (Application Data Protocol Unit) command identifiers and the web-application "www.website.org" can only use the ADPU commands identified in this list. ADPU commands are defined in the ISO 7816 standard.

A method to restrict access to smart card 12 in system 2 is now described in view of figure 4.

Initially, in step 60, the URL address of the web site hosted on server 26 is entered in web-browser 40. In this embodiment, navigating on this web-site requires a secure connection to be established between computer 4 and server 26. This secured connection is established using https protocol. During the establishment of this secured connection, web-browser 40 checks if the URL address belongs to a white list or a black list pre-recorded in memory 24 as disclosed in patent application W02009/027409. If the URL address belongs to the black list, connection to this web site is immediately interrupted. On the contrary, if the URL address belongs to the white list, establishment of the secured connection proceed further and web site certificate 30 is downloaded by web-browser 40.

In step 62, web site certificate 30 is checked to authenticate the web site. If the web site is not authenticated, then connection to this web site is immediately interrupted in step 64.

On the contrary, if the web site is authenticated, then navigation on this web site is authorized and, in step 66, the web-application that interacts with smart cards is downloaded. The downloaded web-application is executed within web-browser 40.

The web-application call a script of library 48 to start interactions with smart cards directly connected to computer 4.

In response, in step 68, library scripts are executed to perform the following tasks. Firstly, it is checked whether or not computer 4 is connected to server 26 through a secured connection. If yes, the web-application certificate 32 is downloaded from server 26. Subsequently, certificate 32 is checked to authenticate the web-application. During this last check, several points are verified. For example, it is verified that :
- the certificate has not yet expired by comparing the current date and time to the validity period of the certificate,
- the certificate data have not been corrupted by verifying the signature, and
- the URL in the certificate correspond to the URL to which web-browser 40 is currently connected.

If the web-application certificate does not satisfy one of these checks, then web-application is not authenticated and a default smart card usage policy is applied. Here the default smart card usage policy consists in immediately interrupting the connection with server 26. Thus, if the web-application is not authenticated, the method proceeds directly to step 64.

If the web-application is authenticated, in step 70, scripts from library 48 are executed to parse certificate 32 in order to extract values XXX and YYY of the certificate extensions "TargetedSmartCardOrSmartCardApplication" and "SmartCardUsage". For example, from values XXX and YYY, a first white list of authorized smart cards and a second white list of authorized ADPU commands are built and recorded in memory 24.

Subsequently, the web-application is authorized to interact with smart cards directly connected to computer 4 through add-on 50, manager 44 and driver 46.

In step 72, each time the web-application tries to interact with a smart card, add-on 50 check :
- if the smart card identifier of the smart card to which the web-application try to interact with belongs to the first white list built in step 70, and
- if the ADPU command to be sent to the smart card belongs to the second white list built in step 70.

If the web-application sends an ADPU command which belongs to the authorized ADPU command to a smart card that belongs to the authorized smart card, then, in step 74, this command is sent to the smart card that performs the corresponding actions in response to this command. For example, smart card 12 may return information on the smart card holder or password securely stored in the smart card. The command may also trigger the execution within the smart card of a smart card application like a cryptographic application.

If the web-application try to interact with a smart card that does not belong to the first list or try to send an ADPU command that does not belong to the second list, then, in step 76, the ADPU command is not sent to the smart card.

Thus, the usage of smart cards by an authenticated web-application can be restricted. For example, access to non-authorized smart cards is prevented.

Writing in smart cards not protected can also be prevented by omitting from the second list any ADPU commands to write data in smart card.

Many other embodiments are possible. For example, only one of the previously presented certificate extensions can be implemented or additional certificate extensions can be implemented. For example, certificate 32 may also comprise an extension, value of which identifies a list of authorized smart card applications. Then, the web-application can only trigger the execution of an authorized smart card application. The execution of smart card applications that do not belong to this list cannot be triggered by this authenticated web-application. This extension may be an additional extension to the two previously presented or used in place of one of the previously presented extensions or the identifiers of authorized smart card applications can be incorporated in one of the previously presented extension value.

The lists, like white lists, may comprise only one or a plurality of identifiers.

The control of the matching between the smart card usage requested by the web-application and the smart card usage control data incorporated in the web-application certificate can be carried out by other software modules than add-on 50. For example, this control can be implemented in manager 44 instead of add-on 50. Manager 44 could also implement authentication mechanism relying on the provided host application certificate.

Smart card reader and smart card may also communicate with each other through a wireless connection.

A same web site may have a plurality of web-applications that interact with smart cards. In such a situation, it is possible to have different web-application certificates for different web-applications of the same web site. It is thus possible to define different smart card access restrictions for different web-applications of the same web site.

What has been taught herein apply to the situation where more than one smart card reader are directly connected to computer 4.

What has been taught herein above also applies to any host application executed by computer 4 and is not limited to web-applications executed within a web-browser. In any case a host application certificate must be available to authenticate the host application and to obtain the smart card usage control data.

## Claims

1. A method to restrict smart card usage by a host application hosted on a host computer to which the smart card is connected, the method comprising :
- receiving and checking (68) a certificate to authenticate the host application requesting usage of the smart card,
- if the application is not authenticated, then restricting (64) the smart card usage to a default smart card usage policy that applies to any non-authenticated host applications,
wherein if the host application is authenticated then, the method also comprises :
- extracting (70) smart card usage control data from the host application certificate, the smart card usage control data defining authorized smart card usages and inhibited smart card usages which are specific to this host application,
- inhibiting (76) any smart card usage triggered by the host application which correspond to an inhibited smart card usage as defined from the smart card usage control data extracted from the host application certificate, and
- authorizing (74) any smart card usage triggered by the host application which correspond to an authorized smart card usage defined from the smart card usage control data extracted from the host application certificate.

2. The method of claim 1, wherein the smart card usage control data defines at least one of the following item :
- a set of smart card identifiers that identifies the only smart card(s) the host application is authorized to used, and
- a set of smart card command identifiers that identifies the only command(s) the host application is authorized or not authorized to use.

3. The method according to any one of the preceding claims, wherein the smart card usage control data defines the identifier(s) of the only smart card applications that can be used by the host application among a greater number of smart card applications hosted in smart cards.

4. The method according to any one of the preceding claims, wherein the host application certificate is conformed to X509 version 3 standard and the smart card usage control data are contained in an optional extension field of this certificate.

5. The method according to any one of the preceding claims, wherein the default smart card usage policy is to inhibit any smart card access from non-authenticated host application.

6. The method according to any one of the preceding claims, wherein the method comprises :
- authenticating (62) a web-site from which is downloaded the host application with a web-site certificate, and subsequently
- only if the web-site is authenticated, proceeding to the receiving and checking (68) of the host application certificate.

7. The method according to any one of the preceding claims, wherein the host application is a web-application executed within a web-browser having a web-browser extension that provides an interface between web-applications and a smart card directly connected to the host computer.

8. Recording medium, wherein the recording medium comprises instructions to carry out a method according to any one of the preceding claims, when the instructions are executed by an electronic calculator.

9. A computer program, wherein the computer program comprises instructions to carry out a method according to any one of claims 1 to 7, when the instructions are executed by an electronic calculator.

10. A host application cryptographic certificate, wherein the certificate includes smart card usage control data adapted to be used by a method according to any one of claims 1 to 7 to define the authorized smart card usages and the non-authorized smart card usages.

11. A host computer comprising at least :
- an electronic calculator (8),
- a smart card reader (10) in which is received a smart card, and
- a memory (24) storing instructions to have the computer performing the following steps when the instructions are executed by the electronic calculator :
- receiving and checking a certificate to authenticate a host application requesting usage of the smart card,
- if the application is not authenticated, then restricting the smart card usage to a default smart card usage policy that applies to any non-authenticated host applications,
wherein the computer is further able to perform the following steps when the instructions are executed by the electronic calculator :
- extracting smart card usage control data from the host application certificate, the smart card usage control data defining authorized smart card usages and inhibited smart card usages which are specific to this host application,
- inhibiting any smart card usage triggered by the host application which correspond to an inhibited smart card usage as defined from the smart card usage control data extracted from the host application certificate, and
- authorizing any smart card usage triggered by the host application which correspond to an authorized smart card usage defined from the smart card usage control data extracted from the host application certificate.
